# EUROPEAN PATENT APPLICATION

(11) **EP 4 776 213 A1**
(43) Date of publication of application: **15.07.2026**
(21) Application number: 23951591.9
(22) Date of filing: 07.09.2023
(51) Int. Cl.: G06Q 50/04, G06Q 30/06, B65D 25/20, G06F 3/041, G06K 19/06, G08B 21/18

(54) **CUSTOMIZED COSMETIC MANUFACTURING METHOD AND SYSTEM THEREOF**

(71) Applicant: Cosmax, Inc., Hwaseong-si, Gyeonggi-do 18622 (KR)
(72) Inventor: SUNG, Si Keong, Seongnam-si, Gyeonggi-do 13356 (KR); PARK, Chun Ho, Seongnam-si, Gyeonggi-do 13483 (KR); AN, Jin Pyo, Seongnam-si, Gyeonggi-do 13486 (KR); SEO, In Won, Pyeongtaek-si, Gyeonggi-do 17809 (KR); SIM, Kyu Cheol, Hwaseong-si, Gyeonggi-do 18596 (KR); JEON, Myeong Won, Hwaseong-si, Gyeonggi-do 18416 (KR); EOM, Tae Il, Hwaseong-si, Gyeonggi-do 18610 (KR); PYO, In Pil, Suwon-si, Gyeonggi-do 16700 (KR)
(74) Representative: Mammel und Maser Patentanwälte PartG mbB
(86) International application number: PCT/KR2023/013449
(87) International publication number: WO 2025/053305

(57) **Abstract**

The present invention relates to a system and a method for manufacturing a customized container label. A method for manufacturing a customized container label according to one embodiment of the present invention may comprise the steps in which: when a management server receives order information for a customized product requested by a user from an order reception server, the management server generates recipe information corresponding to the order information; and when a print management device receives the recipe information from the management server, the print management device generates a label layout including the recipe information.

## Description

### [Technical Field]

The present disclosure relates to a method and a system for manufacturing a customized cosmetic and, more specifically, to a method and a system for automatically manufacturing a cosmetic customized for a consumer's preference and/or skin condition.

### [Background Art]

Cosmetics currently distributed in the market are mass-produced in a factory and released as finished products with different functions and performance characteristics. This factory-based mass production has the advantage of making it easy to monitor each process and ensuring strict quality control, thereby allowing a consumer to use the products with confidence, and also offers advantageous in terms of manufacturer traceability and follow-up management regarding side effects or accidents resulting from the use of cosmetics.

However, when cosmetics are produced using factory-based mass production, although a large quantity can be manufactured in a short time, it is impossible for consumers to individually configure the functions of the cosmetics. Therefore, this may not only fail to satisfy the various purchasing desires of consumers but also have limitations in actively responding to various consumer needs. In addition, mass production makes it difficult to provide cosmetics optimized for the preference or skin conditions of specific consumers. Therefore, there is a need for a method for providing customized cosmetics for customers.

### [Disclosure]

### [Technical Problem]

An aspect of the present disclosure is to provide a system and a method for manufacturing a customized container label including personal identification information so that users can easily distinguish the users' customized products.

An aspect of the present disclosure is to provide a system and a method for manufacturing a customized container label including personal identification information, wherein a user's personal identification information may be included in a label of a customized product, thereby increasing the user's attachment or loyalty to the customized product.

An aspect of the present disclosure is to provide a system and a method for manufacturing a customized container label including recipe information so that users may identify recipes applied to the users' customized products.

An aspect of the present disclosure is to provide a system and a method for manufacturing a customized container label including a recipe code, wherein a recipe code configured according to a user may be included in the label of a customized product, thereby enabling the user to distinguish the user's customized product and increase attachment or loyalty to the customized product.

An aspect of the present disclosure is to provide a system and a method for manufacturing a customized container label including a unique identification code, which is printed in the customized container label such that a filling device may recognize recipe information such as the types and amounts of ingredients to be filled into a container.

An aspect of the present disclosure is to provide a system and a method for manufacturing a customized container label including a unique identification code, which is printed in the customized container label such that a filling device may perform automatic filling according to recipe information while preventing the discharge amount error caused during the filling of ingredients into a container.

An aspect of the present disclosure is to provide a system and a method for manufacturing a customized container label including a unique identification code, wherein user history management may be performed based on the unique identification code of the customized container label attached to a container.

An aspect of the present disclosure is to provide a method and a system capable of automatically manufacturing a cosmetic that is suitable for a consumer's preference and/or skin condition.

An aspect of the present disclosure is to provide a method and a system capable of attaching a consumer's unique identification code to a cosmetic container and automatically manufacturing a customized cosmetic using filling information included in the unique identification code.

An aspect of the present disclosure is to provide a method and a system capable of automatically filling multiple ingredients required for the manufacturing of a customized cosmetic into a cosmetic container.

An aspect of the present disclosure is to provide a method and a system capable of automatically filling ingredients suitable for a specific consumer's preference and/or skin condition into a cosmetic container by using the consumer's unique identification code attached to the cosmetic container.

### [Technical Solution]

A method for manufacturing a customized container label, according to an embodiment of the present disclosure, may include: upon receiving order information for a customized product requested by a user from an order-receiving server, generating recipe information corresponding to the order information by a management server; and upon receiving the recipe information from the management server, generating a label layout including the recipe information by a printing management device.

A method for manufacturing a customized container label by a printing management device, according to an embodiment of the present disclosure, may include: receiving order information for a customized product requested by a user from a management server; generating recipe information corresponding to the order information; and generating a label layout including the recipe information.

A customized cosmetic manufacturing system according to an embodiment of the present disclosure may include: a management server configured to, upon receiving order information for a customized product requested by a user from an order-receiving server, generate recipe information corresponding to the order information; a printing management device configured to, upon receiving the recipe information from the management server, generate a label layout including the recipe information; and a label printer configured to output a customized container label according to the label layout.

According to an embodiment of the present disclosure, a printing management device may include: a reception unit configured to receive order information for a customized product requested by a user from a management server; a preprocessing unit configured to generate recipe information corresponding to the order information; and a layout generation unit configured to generate a label layout including the recipe information.

In addition, the above-described solutions to the problem are not intended to enumerate all features of the present disclosure. The various features of the present disclosure and the advantages and effects resulting therefrom will be more fully understood with reference to the following detailed embodiments.

### [Advantageous Effects]

According to the system and the method for manufacturing a customized container label including personal identification information according to an embodiment of the present disclosure, a user can easily distinguish the user's customized product by using the personal identification information included in a label attached to a customized product.

According to the system and the method for manufacturing a customized container label including personal identification information according to an embodiment of the present disclosure, a user can recognize a customized product as a limited edition made specifically for the user by the personal identification information included in the label, thereby increasing the user's attachment or loyalty to the customized product.

According to the system and the method for manufacturing a customized container label including a recipe code according to an embodiment of the present disclosure, a user can identify a recipe applied to the user's customized product by using the recipe code. Therefore, the user can easily distinguish the user's customized product, and repurchase the same customized products based on the recipe code.

According to the system and the method for manufacturing a customized container label including a recipe code according to an embodiment of the present disclosure, a user can recognize a customized product as a limited edition made specifically for the user by the recipe code included in the label, thereby increasing the user's attachment or loyalty to the customized product.

According to the system and the method for manufacturing a customized container label including a unique identification code according to an embodiment of the present disclosure, a unique identification code including recipe information such as the types and amounts of ingredients to be filled into containers may be printed in the customized container label. Thereafter, when the customized container label is attached to the container and used, the filling device may recognize the recipe information from the unique identification code by using a code reader or the like, thereby making it possible to accurately identify the types and amounts of ingredients filled into each container and thus manufacture customized products.

In addition, by using the unique identification code included in the customized container label, the filling device may automatically perform filling according to corresponding recipe information, without the need to manually check and instruct the filling amount for each container, and may also prevent discharge amount errors that may occur during raw-material filling.

According to the system and the method for manufacturing a customized container label including a unique identification code according to an embodiment of the present disclosure, it is also possible to perform user-history management, based on the unique identification code.

According to at least one of the embodiments of the present disclosure, a unique identification code of a specific consumer may be attached to a cosmetic container, and by using filling information included in the attached unique identification code, customized cosmetics suitable for the consumer's preference and/or skin condition may be automatically manufactured.

According to at least one of the embodiments of the present disclosure, a unique identification code of a specific consumer attached to a cosmetic container may be recognized, and ingredients suitable for the consumer's preference and/or skin condition may be automatically filled into the cosmetic container by using filling information included in the unique identification code.

### [Description of Drawings]

FIG. 1 is a schematic diagram of a system for manufacturing a customized container label according to an embodiment of the present disclosure.
FIG. 2 is an exemplary diagram illustrating a label layout according to an embodiment of the present disclosure.
FIG. 3 is an exemplary diagram illustrating a recipe code according to an embodiment of the present disclosure.
FIG. 4 is an exemplary diagram illustrating data extracted from a unique identification code according to an embodiment of the present disclosure.
FIGS. 5 and 6 are block diagrams illustrating a printing management device according to an embodiment of the present disclosure.
FIG. 7 is a flowchart illustrating a method for manufacturing a customized container label including personal identification information according to an embodiment of the present disclosure.
FIG. 8 is a flowchart illustrating a method for manufacturing a customized container label including personal identification information by a printing management device according to an embodiment of the present disclosure.
FIG. 9 is a flowchart illustrating a method for manufacturing a customized container label including a recipe code according to another embodiment of the present disclosure.
FIG. 10 is a flowchart illustrating a method for manufacturing a customized container label including a recipe code by a printing management device according to another embodiment of the present disclosure.
FIG. 11 is a flowchart illustrating a method for manufacturing a customized container label including a unique identification code according to another embodiment of the present disclosure.
FIG. 12 is a flowchart illustrating a method for manufacturing a customized container label including a unique identification code by a printing management device according to another embodiment of the present disclosure.
FIG. 13 is a diagram illustrating a configuration of a customized cosmetic sales system according to an embodiment of the present disclosure.
FIG. 14 is a flowchart illustrating a customized cosmetic sales process according to an embodiment of the present disclosure.
FIG. 15 is a diagram illustrating a configuration of a customized cosmetic manufacturing system according to an embodiment of the present disclosure.
FIG. 16 is a flowchart illustrating a customized cosmetic manufacturing process according to an embodiment of the present disclosure.
FIG. 17 is a diagram illustrating a configuration of a customized cosmetic manufacturing system according to another embodiment of the present disclosure.
FIG. 18 is a diagram illustrating a configuration of an automatic customized cosmetic filling system according to an embodiment of the present disclosure.
FIG. 19 is a flowchart illustrating an automatic customized cosmetic filling process according to an embodiment of the present disclosure.

### [Mode for Invention]

Hereinafter, preferred embodiments of the present disclosure will be described in detail with reference to the accompanying drawings so that those skilled in the art to which the present disclosure pertains may easily practice the present disclosure. However, in the following detailed description of preferred embodiments of the present disclosure, detailed descriptions of related known functions or configurations are omitted when the detailed descriptions are deemed to unnecessarily obscure the subject matter of the present disclosure. In addition, the same reference numerals are used throughout the drawings to denote parts that perform similar functions and operations.

In addition, in the entire specification, when a part is described as being "connected" to another part, this includes not only a case in which the parts are "directly connected" to each other, but also a case in which the parts are "indirectly connected" to each other with another element interposed therebetween. In addition, the wording "including" a component means that the wording does not exclude other components, but may further include other components, unless specifically stated to the contrary. Furthermore, the terms "unit" and "module" used in the present specification refer to a unit that processes at least one function or operation, and may be implemented in hardware, software, or a combination of hardware and software.

### <Customized Container Label Manufacturing System>

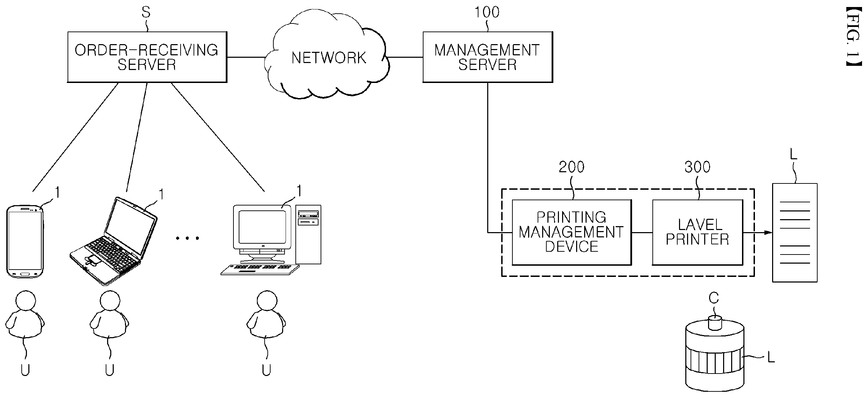

FIG. 1 is a schematic diagram illustrating a customized container label manufacturing system according to an embodiment of the present disclosure.

Referring to FIG. 1, a customized container label manufacturing system according to an embodiment of the present disclosure may include a management server 100, a printing management device 200, and a label printer 300.

Hereinafter, the customized container label manufacturing system according to an embodiment of the present disclosure will be described with reference to FIG. 1.

A user terminal 1 may access an order-receiving server S through a wired or wireless communication network, and a user U may input various pieces of information to the order-receiving server S via the user terminal 1 to order a customized product.

The user terminal 1 may include a memory configured to store a program and a protocol for transmitting and receiving information, and a processor configured to execute various programs for computation and control, and may be implemented in various forms depending on the embodiment. For example, the user terminal 1 may be a mobile terminal to which wireless communication technology is applied, such as a smart phone, a tablet PC, a notebook, a personal digital assistant (PDA), a portable multimedia player (PMP), or a wearable device (e.g., a smart watch, a smart glass, or a head-mounted display (HMD)), or a non-portable digital device such as a PC, an IPTV, or a smart TV. Furthermore, in some embodiments, the user terminal 1 may be implemented as a dedicated device, such as a kiosk, for ordering customized products.

The user terminal 1 and the order-receiving server S may be connected to each other through a communication network. The communication network may include a wired network and a wireless network, and specifically may include various networks such as a local area network (LAN), a metropolitan area network (MAN), and a wide area network (WAN). In addition, the communication network may include the well-known World Wide Web (WWW). However, the communication network according to the present disclosure is not limited to the aforementioned networks and may include at least one of a well-known wireless data network, a well-known telephone network, or a well-known wired/wireless television network.

The user terminal 1 may provide a service to the user U, based on information provided from the order-receiving server S. As an example, the user U may use the user terminal 1 to execute a web page or an application provided by the order-receiving server 100, and thereby may be provided with a purchase service for customized products.

The order-receiving server S may provide the user terminal 1 with an interface such as a web page or an application for purchasing a customized product. Here, the order-receiving server S may be a server operated by a product seller, and customized products sold by the product seller may include cosmetics such as skin toner, lotion, essence, cushion, foundation, mask, lipstick, tint, balm, and liquid lipstick, or hygiene products such as shampoo, rinse, body shampoo, cleansing oil, cleansing foam, and cleansing tissue.

The order-receiving server S may request to the user terminal 1 for characteristic information indicating the user U's preference, taste, health condition, or skin condition in order to provide a customized product for the user. For example, the order-receiving server S may request an online survey from the user terminal 1, and each survey item may include questions to identify the user U's preference, taste, health condition, or skin condition. Here, the online survey may further include measuring skin type and capturing and uploading an image of the user's product usage area. Therefore, the order-receiving server S may be provided with characteristic information about the user U through an online survey.

Subsequently, when the user terminal 1 requests a purchase of a customized product specified based on the online survey, the order-receiving server S may generate order information, etc. Here, the order information may include personal identification information corresponding to the user U and characteristic information, and may further include invoice information for the customized product to be delivered to the user.

As used in the present specification, personal identification information refers to any information for identifying a cosmetic user. For example, the personal identification information is information for specifying each user U, and may be a character, a number, a symbol, an emoticon, an image, a color, or the like, input by the user U to the order-receiving server S via the user terminal 1. For example, a user may generate an ID or nickname representing the user by combining characters, numbers, symbols, emoticons, images, colors, etc., and the order-receiving server S may store the ID or nickname as personal identification information of each user U. Furthermore, in some embodiments, it is also possible to configure a signature image input by the user U using a touch input inside the user terminal 1 as personal identification information. For example, when the user terminal 1 is provided with a touch panel, the user U may apply a touch input to the touch panel, and thus, the user U may generate a signature image of the user U's signature, handwriting, drawing, and the like, and input the signature image as the user U's personal identification information.

Furthermore, when the user U does not input the user U's personal identification information, the order-receiving server S may generate personal identification information by combining arbitrary characters, numbers, and symbols. In some embodiments, the order-receiving server S may automatically generate personal identification information, based on personal information such as the name or phone number of the user U.

The management server 100 may be a server operated by a product manufacturer and may receive order information for a customized product requested by a user U from the order-receiving server S. In other words, to manufacture a customized product in accordance with a request from a product seller, a product manufacturer may receive order information from the order-receiving server S via the management server 100. Subsequently, to manufacture the customized product, the management server 100 may first manufacture a customized container label L to be attached to a container C for the customized product.

The management server 100 may generate corresponding recipe information from each piece of order information.

The recipe information used in the present specification refers to all types of information related to a cosmetic manufacturing method. For example, the recipe information may be information about the types or amounts of ingredients included in each customized product. In other words, customized products are differently selected depending on characteristic information of the users U, and are thus required to be manufactured individually based on the received order information. To this end, the management server 100 may generate recipe information for manufacturing a customized product from the received order information. For example, by configuring the types and amounts of ingredients to be filled into a single container as recipe information, it is possible to distinguish between various customized products.

Here, recipe information for manufacturing customized products corresponding to the characteristic information of each user U may be preconfigured. The management server 100 may identify characteristic information and then generate recipe information corresponding to the characteristic information. For example, when an online survey includes three questions with five multiple-choice options, there are 125 possible user U responses. Here, when recipe information corresponding to each case is pre-matched, the management server 100 may generate corresponding recipe information from the characteristic information included in the order information.

In addition, the management server 100 may extract personal identification information included in the order information, and the personal identification information may be printed on the customized container label L to be attached to the container C of the customized product. In other words, the personal identification information is created by each user U to distinguish users U, and a user U can easily distinguish the user U's customized product by using the personal identification information printed on the customized container label L. For example, family members living together may use respective customized shampoos purchased from the same product seller, and in this case, the family members may have difficulty in identifying which customized shampoo belongs to each of the family members.

On the other hand, according to an embodiment of the present disclosure, since each customized shampoo is marked with the user U's personal identification information, even when there are multiple customized shampoos, the user U can easily distinguish the user's customized shampoo. In addition, the user U may personally generate the user U's personal identification information by using a nickname, or the like, and thus may distinguish the user U's customized shampoo while maintaining anonymity. Furthermore, the user U may recognize the customized shampoo as a limited edition made for the user U through the personal identification information, thereby increasing attachment to or loyalty to the product.

In addition, the management server 100 may generate a recipe code from the recipe information.

As used in the present specification, the recipe code refers to all codes related to cosmetic recipe information. For example, the recipe code may visually represent the types and amounts of ingredients included in a customized product according to the recipe information. That is, the recipe code may be implemented using characters, numbers, symbols, colors, and images, and in some embodiments, may be generated by selecting and combining at least two of these. Here, conversion rules for generating a recipe code from recipe information may be preconfigured.

Specifically, the recipe information may include information on the types and amounts of base ingredients included in the customized product, the types and contents of ampoule ingredients used to provide the functional effects of the customized product, the types of fragrance ingredients, the intensity of the fragrance, and whether functional ingredients are included.

Here, base codes indicating the types and amounts of base ingredients, ampoule codes indicating the types of ampoule ingredients, content codes indicating the contents of ampoule ingredients, fragrance codes indicating the types of fragrance ingredients, fragrance level codes indicating the intensity of fragrance, and functional codes indicating whether functional ingredients are included may be predetermined. Therefore, when the types and amounts of base ingredients, the types and contents of ampoule ingredients, the types of fragrance ingredients, the intensity of fragrance, and whether functional ingredients are included are determined by the recipe information, base codes, ampoule codes, content codes, fragrance codes, fragrance level codes, and functional codes may be determined according to the conversion rules, and these may be combined to generate recipe codes. The base codes, the amplification codes, the content codes, the fragrance codes, the fragrance level codes, and the functional codes may be distinguished using numbers, characters, symbols, colors, images, etc., and may be combined in a predetermined order to configure recipe codes.

For example, when the customized product is shampoo, the base ingredients may include seven types of base ingredients depending on the ratio of cleansing base to conditioning base, including such as a first base material of 100% cleansing base, a second base ingredient of 90% cleansing base and 10% conditioning base, a third base ingredient of 75% cleansing base and 25% conditioning base, and so on, and one of these base ingredients may be selected according to the recipe information. In this case, the base ingredients may be mapped to numbers 1 to 7 to configure base codes. That is, each of the base codes may be one of numbers 1 to 7 corresponding to the base ingredients included in the customized product.

In addition, in the case of a customized shampoo, the recipe information may include various ampoules for achieving functional effects, such as scalp ampoules or hair ampoules, and the types of the various ampoules may be represented by ampoule codes. In other words, multiple modules having different functions according to respective active ingredients and concept ingredients may be preconfigured, and the types of the scalp ampoule and hair ampoule may be distinguished according to combinations of these modules.

For example, various types of modules may be preconfigured, such as: a deep-cleansing module having a keratolytic function, which contains 10% salicylic acid as an active ingredient and Anti Sebum P(HD) and pearl tea as concept ingredients; a dry module having a moisturizing function, which contains 15% panthenol and 10% Aquaxyl as active ingredients and Miracle Mineral and beer fermentation yeast extract as concept ingredients. One of these modules or a combination thereof may be used to implement various types of scalp ampoules and hair ampoules.

In some embodiments, each scalp ampoule or hair ampoule may include a color ingredient, and the color or transparency of the customized shampoo may be determined according to the type and amount of the added color ingredient. That is, it is possible to determine the color or transparency of a customized product in accordance with the user's preference.

Here, each implemented scalp ampoule and hair ampoule may be assigned corresponding numbers to configure respective scalp care code and hair care code, and each of the scalp care code and the hair care code correspond to an ampoule code. In addition, as fragrance ingredients included in the shampoo, there may be six types of fragrance ingredients such as unscented, white musk, fresh aqua, citrus green, herb, and flower blossom, and any one of these may be selected according to the recipe information. In this case, each of the fragrance ingredients may be mapped to number from 0 to 5 to configure a fragrance ingredient code. That is, the fragrance ingredient code may be any one of the numbers 0 to 5 corresponding to the fragrance ingredient included in the customized product.

The intensity of fragrance may be classified into multiple levels according to the fragrance concentration, and in some embodiments, may be classified into four levels: unscented, mild, ordinary, and strong. Here, the fragrance levels may be mapped to numbers 0 to 3 to configure a fragrance level code. That is, the fragrance level code may be one of numbers 0 to 3 corresponding to the fragrance levels included in the customized shampoo.

In terms of functionality, if the shampoo is non-functional and does not have functionalities such as anti-hair loss functionality, the character "S" may be added, whereas, if the shampoo is functional with anti-hair loss functionality, the character "S" may be omitted. That is, the character "S" may be configured as a functional code. However, although the hair loss functionality has been exemplified here, various other functionalities may also be represented by characters, numbers, colors, images, or the like.

Therefore, a recipe code for a customized shampoo may be configured, for example, as "1400104s," where the first digit "1" may correspond to a base code, the second digit "4" may correspond to a fragrance ingredient code, the third digit "0" may correspond to a fragrance level, the fourth and fifth digits "01" may correspond to scalp care code, the sixth and seventh digits "04" may correspond to hair care code, and "s" may correspond to a functional code. In other words, a user can check recipe information including functions applied to each of the customized products through a recipe code, and can intuitively recognize differences from other customized products. In addition, since a customized product may be manufactured with different recipe information for each user, the user can also distinguish the customized product from another user's customized product by using a recipe code.

In addition, the management server 100 may generate a unique identification code from the recipe information.

The unique identification code described in the present specification refers to all codes for identifying cosmetics. As one example, the unique identification code may include recipe information of a corresponding customized product and may be implemented as a two-dimensional barcode such as a QR code, a micro QR code, or a data matrix, or as a conventional one-dimensional barcode. The unique identification code may be printed on a customized container label L and attached to each container C, and the filling device (not shown) may use the unique identification code to recognize the types and amounts of ingredients to be filled into each container C.

Specifically, a customized container label L, on which a unique identification code is printed, may be attached to each container C, and the containers C may be sequentially conveyed to the filling device via a container belt or the like. In this case, a code reader (not shown) may be provided in front of the filling device, and the unique identification code of each container C may be scanned using the code reader. Here, the unique identification code includes recipe information corresponding to each container C, so the code reader may scan the unique identification code to extract recipe information regarding the type and amount of ingredient to be filled into each container C.

Subsequently, the code reader may sequentially input the extracted recipe information to the filling device, and the filling device may synchronize the order of the containers C being conveyed with the order of the input recipe information, and then fill the ingredients into each container C.

In some embodiments, multiple types of ingredients may be filled into each container C, and to this end, the filling device may include multiple filling units for storing respective ingredients. In this case, the filling device may further include a code reader in front of all or some of the filling units, so as to identify recipe information corresponding to the containers C before the filling units begin filling the containers C. This may prevent incorrect types or amounts of ingredients from being injected into the containers C.

When the filling device completes the filling of ingredients into the containers C, the containers C may be conveyed to undergo processes such as capping, mixing, and packaging, thereby finally completing a customized product.

Additionally, in some embodiments, the unique identification code may further include customer information about the user U or container information about each container C in addition to the recipe information. Here, the customer information may be information input by the user U into the order-receiving server S and may include the user's name, contact information, address, and a user ID (identifier) registered by the user in the order-receiving server S. However, the present disclosure is not limited thereto, and various other pieces of information about the user, such as the user's gender or age, may be further included according to an embodiment. In addition, the container information is configured in the container C of a customized product, and may be a unique code assigned to individually distinguish each container C. That is, the container information may be a production instruction number, a lot number, or the like, and each container C may be specified and distinguished using the container information.

The management server 100 may extract customer information of the user U from the received order information, and may generate history information for users by mapping recipe information to the customer information. In this case, each user may be specified using customer information, and by mapping the customer information to the recipe information, which customized products each user has ordered may be stored as history information. In some embodiments, it is also possible to generate history information for each container C by mapping the recipe information to the container information. In other words, a container C may be specified using the container information, and the container C may be filled according to recipe information corresponding to a specific user, thereby manufacturing a customized product, and through this, the filling device may store manufacturing histories of the customized product as history information. Additionally, it is also possible to generate history information by mapping all of the customer information, the container information, and the recipe information.

Subsequently, the management server 100 may receive, from the filling device, filling information about the types and amounts of ingredients actually filled into each container C, and may update the history information with the filling information and store the updated history information. In some embodiments, whenever the filling is completed in one filling unit or a predetermined number of filling units included in the filling device, it is also possible to scan unique identification code of a container C, find history information corresponding to the container C, and update the filling information. In this case, an administrator may check the history information of each user by using the management server 100, and thereby may identify and manage missing filling of some ingredients or discharge amount errors in each container C.

Meanwhile, in the present embodiment, it is exemplified that a server (i.e., an order-receiving server) operated by a product seller and a server (i.e., a management server) operated by a product manufacturer are independently configured, but the present disclosure is not necessarily limited thereto. For example, in a case where a product seller and a product manufacturer exist separately, and the product seller has the product manufacturer deliver customized products using methods such as original equipment manufacturing (OEM), original development manufacturing (ODM), or original brand manufacturing (OBM), the product seller may operate the order-receiving server S and the product manufacturer may operate the management server 100. On the other hand, in case that the product seller and the product manufacturer are the same, it is obvious to those skilled in the art that the order-receiving server S and the management server 100 may be integrated into one server, platform, or system.

When receiving at least one among recipe information, personal identification information, a recipe code, and a unique identification code from the management server 100, the printing management device 200 may generate a label layout including the at least one among the recipe information, the personal identification information, the recipe code, and the unique identification code. In some embodiments, when a predetermined number of pieces of order information are received by the management server 100, the printing management device 200 may receive at least one among the recipe information, the personal identification information, the recipe code, and the unique identification codes according to each piece of the order information from the management server 100, and then may start producing a customized container label L.

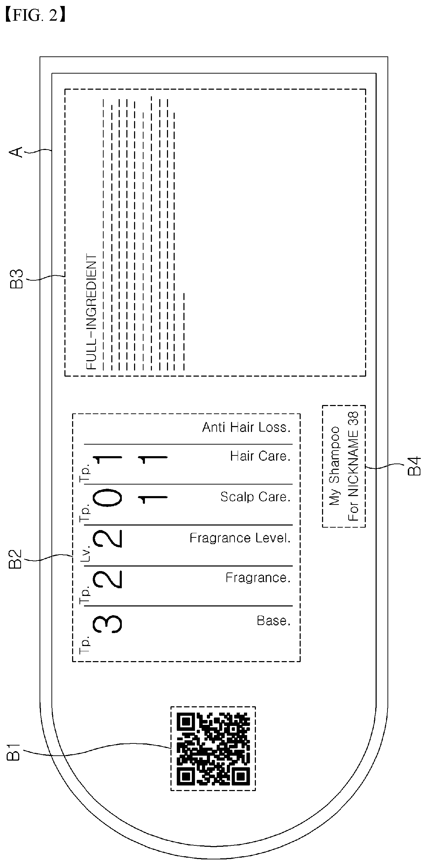

The printing management device 200 may generate a label layout for each customized container label L to print the customized container label L. In other words, as illustrated in FIG. 2, a label layout A may be generated, and the label layout A may include a unique identification code area B1, a recipe code area B2, a full-ingredient display area B3, and a personal identification information area B4.

However, the present disclosure is not limited to FIG. 2, and in some embodiments, some of the areas included in the label layout A may be omitted or added, and the positions and sizes of the areas may also be variously changed. For example, the personal identification information area B4, the recipe code area B2, and the unique identification code area B1 may be disposed side by side within the label layout and configured to be recognized at once by a single recognition device. Through this label layout structure, the number of steps in which the areas are recognized by multiple recognition devices can be reduced, thereby reducing the number of the recognition devices required for the information recognition.

As another example, the label layout may include a code area A1 including a combination of at least two areas selected from the group including the unique identification code area B1 to the personal identification information area B4. A customer using a product may recognize the code area A1 by using an electronic device, thereby identifying the content of at least one of the unique identification code area B1 to the personal identification information area B4. Therefore, by ensuring that the content of the at least one of the unique identification code area B1 to the personal identification information area B4 is not exposed on the product exterior, personal information may be kept from being visible on the product exterior while allowing the customer or user to identify the corresponding information.

The unique identification code area B1 may have a unique identification code including recipe information of the corresponding customized product. The unique identification code may be implemented as a two-dimensional barcode such as a QR code, a micro QR code, or a data matrix, or as a conventional one-dimensional barcode. During the manufacturing of a customized product, a unique identification code attached to a container C of the customized product may first be recognized, and the filling device (not shown) may configure the types and amounts of ingredients to be filled, according to the recipe information recognized from the unique identification code, and automatically fill the container C with the ingredients. Therefore, a unique identification code including recipe information may be included in the customized container label L, and the printing management device 200 may include, within the label layout A, the unique identification code area B1 for specifying the location of the unique identification code. In some embodiments, the unique identification code may further include invoice information or customer information in addition to the recipe information.

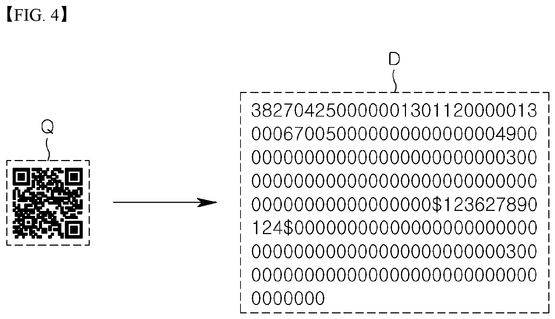

Here, as illustrated in FIG. 4, when a unique identification code Q is scanned using a code reader, the code reader may extract scan data D that is represented by a series of numbers. In other words, recipe information indicating the types and amounts of ingredients to be filled into containers C, and the user's customer information or container information, may be included in the unique identification code Q according to a predetermined rule. Therefore, the filling device may extract the recipe information, the customer information, and the container information from the scan data D, and may use the extracted information to distinguish between the respective containers C and perform filling operations on the containers C.

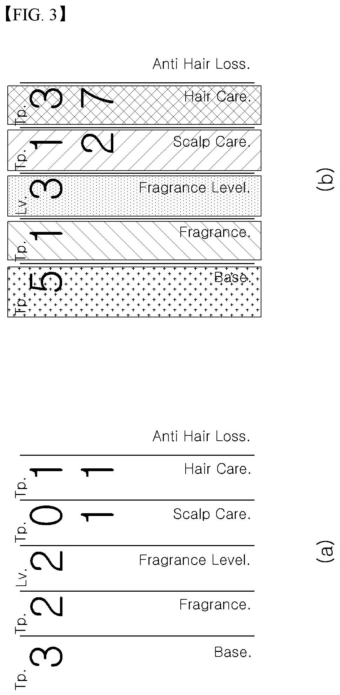

The recipe code area B2 may have a recipe code for the customized product. The conversion rules for converting recipe information into a recipe code may be predetermined, and the recipe code generated according thereto may be displayed within the recipe display area B2. Referring to (a) of FIG. 3, the recipe code may be implemented as a number. The base code is "3," the fragrance ingredient code is "2," the fragrance level code is "2," the scalp care code is "01," and the hair care code is "11." Therefore, the recipe code obtained by combining these is "3220111." Here, since the customized shampoo includes anti-hair loss functionality, it can be observed that the character "S" is not included in the recipe code.

Furthermore, in some embodiments, as illustrated in (b) of FIG. 3, it is also possible to display the recipe code by combining numbers and colors, and in this case, the user may easily recognize the base code, the fragrance ingredient code, the fragrance level code, the scalp care code, and the hair care code by distinguishing the codes with colors. Meanwhile, in some embodiments, it is also possible to represent a recipe code using only colors without numbers. For example, the base code may be set to red, the fragrance ingredient code to orange, the fragrance level code to yellow, the scalp care code to green, and the hair care code to blue, and the codes may be represented by distinguishing the brightness and saturation in multiple stages.

The user may recognize recipe information applied to the user's customized product through the recipe code, and thus specify the user's customized product and distinguish the user's customized product from other customized products. In addition, the user may more clearly recognize, through the recipe code, that the customized product is made exclusively for the user, and thus may increase affection or loyalty to the user's customized product.

The full-ingredient display area B3 may display full ingredients included in the customized product. Here, the full ingredients of the customized product may be predetermined according to respective recipe information, and the full ingredients may be preconfigured to be displayed in accordance with the law.

The personal identification information area B4 may include personal identification information configured by users U. The personal identification information is generated directly by of the users U to distinguish between the users U and, by using the personal identification information printed on the customized container label L, the users U may easily distinguish between customized products of the users U.

For example, family members living together may use respective customized shampoos purchased from the same product seller, and in such a case, it may be difficult for the family members to identify which customized shampoo belongs to each of the family members. In this case, by using personal identification information displayed on each customized shampoo, the family members can easily distinguish the family members' own customized shampoos. In addition, a user U may directly generate the user U's personal identification information by using a nickname, and thus may distinguish the user U's customized shampoo while maintaining anonymity. Furthermore, the user U may recognize the customized shampoos as a limited edition made specifically for the user U through the personal identification information, and thus may increase affection or loyalty to the product.

When at least one among the recipe information, the personal identification information, the recipe code, and the unique identification code is received, the printing management device 200 may generate each label layout based on the received information or code, and may transmit the label layout to the label printer 300 to request the printing of a customized container label L.

When the label layout is received from the printing management device 200, the label printer 300 may print a customized container label L according to the label layout. When label paper is supplied, the label printer 300 may perform printing on the label paper according to the label layout to generate a customized container label L. Here, the label printer 300 may print using an inkjet method or a laser jet method, and any other method for printing a label may also be used. The customized container label L manufactured by the label printer 300 may be attached to a container C of a customized product thereafter, and the customized product may be manufactured by performing filling according to the unique identification code included in the customized container label L.

Although the printing management device 200 and the label printer 300 are distinguished as separate devices in FIG. 1, in some embodiments, the printing management device 200 and the label printer 300 may be integrated into one device.

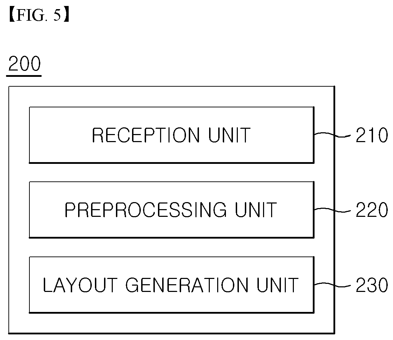

In some embodiments, the management server 100 may store the order information received from the order-receiving server S and may also cause the printing management device 200 to generate recipe information/recipe codes/unique identification codes and to extract user identification information from the order information. In this case, as shown in FIG. 5, the printing management device 200 may include a reception unit 210, a preprocessing unit 220, and a layout generation unit 230.

The reception unit 210 may receive order information for a customized product requested by the user U from the management server 100. That is, the reception unit 210 may receive order information stored in the management server 100, and in some embodiments, may receive a predetermined number of pieces of order information from the management server 100 according to a production plan.

The preprocessing unit 220 may extract personal identification information included in the order information, generate recipe information corresponding to the order information, and generate a recipe code and a unique identification code from the recipe information. The order information includes the user U's personal identification information, and thus, the personal identification information may be extracted, corresponding recipe information may be generated from the user U's characteristics included in the order information, and a recipe code may be generated according to a conversion rule for converting the recipe information into the recipe code. In addition, a unique identification code may be generated by coding the recipe information in a QR code or a barcode. The unique identification code may be implemented as a two-dimensional barcode, such as a QR code, a micro QR code, or a data matrix, or a conventional one-dimensional barcode. Since the personal identification information extraction and the recipe information/recipe code/unique identification code generation have been previously described, a detailed description thereof will be omitted herein.

The layout generation unit 230 may generate a label layout including at least one of recipe information, a recipe code, a unique identification code, and personal identification information, and transmit the generated label layout to the label printer 300 so that the label printer 300 prints a customized container label L.

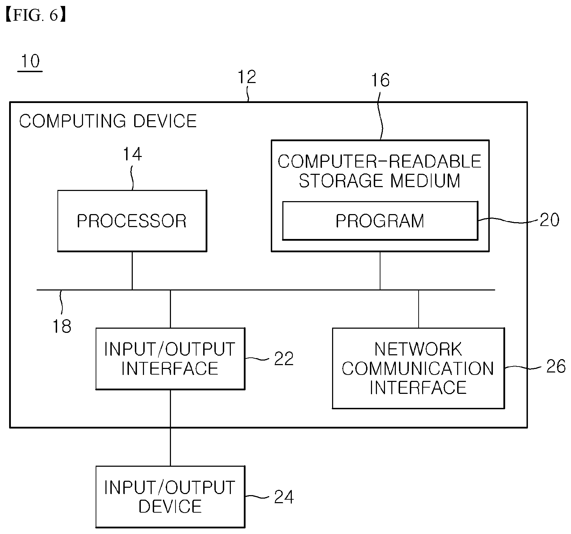

FIG. 6 is a block diagram illustrating a computing environment 10 including a computing device suitable for use in exemplary embodiments. In the illustrated embodiment, components may each have other functions and capabilities in addition to those described below, and additional components other than those described below may be included.

The illustrated computing environment 10 includes a computing device 12. In an embodiment, the computing device 12 may be the printing management device 200 according to embodiments of the present disclosure. The computing device 12 includes at least one processor 14, a computer-readable storage medium 16, and a communication bus 18. The processor 14 may cause the computing device 12 to operate according to the above-described exemplary embodiments. For example, the processor 14 may execute one or more programs stored in the computer-readable storage medium 16. The one or more programs may include one or more computer-executable instructions, and the computer-executable instructions may be configured to, when executed by the processor 14, cause the computing device 12 to perform operations according to the exemplary embodiments.

The computer-readable storage medium 16 is configured to store computer-executable instructions or program code, program data, and/or other suitable forms of information. A program 20 stored in the computer-readable storage medium 16 includes a set of instructions executable by the processor 14. In an embodiment, the computer-readable storage medium 16 may be a memory (a volatile memory such as random-access memory, a non-volatile memory, or a suitable combination thereof), one or more magnetic disk storage devices, optical disk storage devices, flash memory devices, other forms of storage media that can be accessed by the computing device 12 and store desired information, or a suitable combination thereof.

The communication bus 18 interconnects various other components of the computing device 12, including the processor 14 and the computer-readable storage medium 16.

The computing device 12 may also include at least one input/output interface 22 that provide an interface for at least one input/output device 24, and at least one network communication interface 26. The input/output interface 22 and the network communication interface 26 are connected to the communication bus 18. The input/output device 24 may be connected to other components of the computing device 12 via the input/output interface 22. The exemplary input/output device 24 may include an input device such as a pointing device (e.g., a mouse or a trackpad), a keyboard, a touch input device (e.g., a touchpad or a touchscreen), a voice or sound input device, various types of sensor devices, and/or an imaging device, and/or an output device such as a display device, a printer, a speaker, and/or a network card. The exemplary input/output device 24 may be included inside the computing device 12 as a component constituting the computing device 12, or may be a separate device distinct from the computing device 12, and may be connected to the computing device 12.

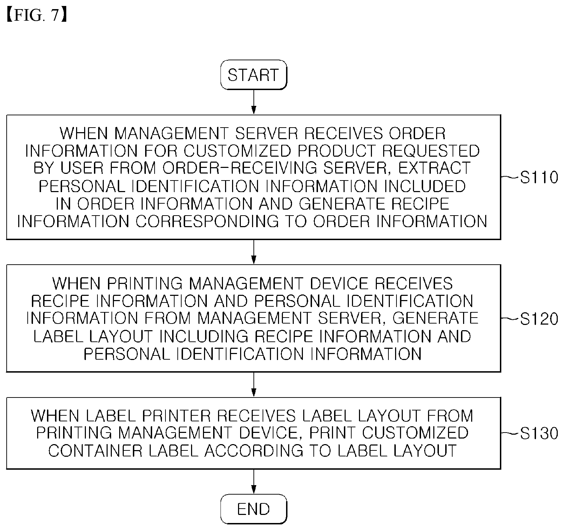

FIG. 7 is a flowchart illustrating a method for manufacturing a customized container label including personal identification information according to an embodiment of the present disclosure.

Referring to FIG. 7, a management server may receive order information for a customized product requested by a user from an order-receiving server. In this case, the management server may extract personal identification information included in the order information and generate recipe information corresponding to the order information (S110).

Here, the customized product may be a cosmetic product such as a lotion, essence, skin toner, cushion, foundation, mask, lipstick, tint, balm, or liquid lipstick, or a hygiene product such as shampoo, rinse, body shampoo, cleansing oil, cleansing foam, or cleansing tissue. That is, cosmetics or hygienic products may be produced in a customized manner for each user, and recipe information for producing the customized cosmetics or customized hygiene products may be generated from order information. The recipe information may include information about the types and amounts of ingredients filled into a container according to the order information.

In addition, personal identification information is generated directly by users to distinguish each user and may be printed on a customized container label to be attached to a container of a customized product. That is, the user can easily distinguish the user's customized product by using the personal identification information printed on the customized container label. Specifically, the personal identification information may be a character, a number, a symbol, an emoticon, an image, a color, or the like, which the user inputs to the order-receiving server by using a user terminal. In some embodiments, it is also possible to generate personal identification information by combining at least two or more of these. Furthermore, in some embodiments, it is also possible for a user to configure a signature image, input using a touch input within the user terminal, as the user's personal identification information.

Subsequently, a printing management device may receive the recipe information and the personal identification information from the management server, and the printing management device may generate a label layout including the recipe information and the personal identification information (S120). That is, the printing management device may generate a label layout for each customized container label to print the customized container label. For example, the label layout may include a unique identification code area, a recipe code area, a full-ingredient display area, a trademark area, and a personal identification information area. Here, the recipe information may be displayed in the form of a recipe code within the recipe code area, and the personal identification information may be displayed within the personal identification information area. When the label layout is generated, the printing management device may transmit the generated label layout to a label printer and request printing of a customized container label.

The label printer may receive the label layout from the printing management device and may print a customized container label according to the label layout (S130). When label paper is supplied, the label printer may perform printing on the label paper according to the label layout to generate a customized container label. The label printer may print using an inkjet method or a laser jet method. Subsequently, the customized container labels produced by the label printer may be attached to a container C of a customized product, and the customized product may be manufactured by performing filling according to a unique identification code included in the customized container label.

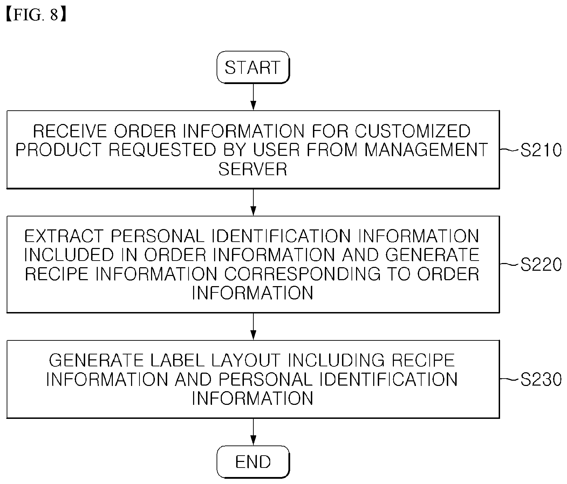

Additionally, in some embodiments, the management server may store the order information received from the order-receiving server and may cause the printing management device to perform recipe information generation and user identification information extraction from the order information. In this case, referring FIG. 8, the printing management device may receive order information for a customized product requested by a user from the management server (S210). In other words, the printing management device may receive the order information stored in the management server, and in some embodiments, may receive a predetermined number of pieces of order information from the management server according to a production plan.

The printing management device may extract personal identification information included in the order information and generate recipe information corresponding to the order information (S220). Since the personal identification information of the user is included in the order information, the personal identification information may be extracted, and corresponding recipe information may be generated from the user's characteristic information included in the order information. Since the personal identification information extraction and the recipe information generation have already been described above, detailed descriptions thereof will be omitted here.

The printing management device may generate a label layout including the recipe information and the personal identification information (S230). Subsequently, the generated label layout may be transmitted to the label printer, thereby causing the label printer to print a customized container label.

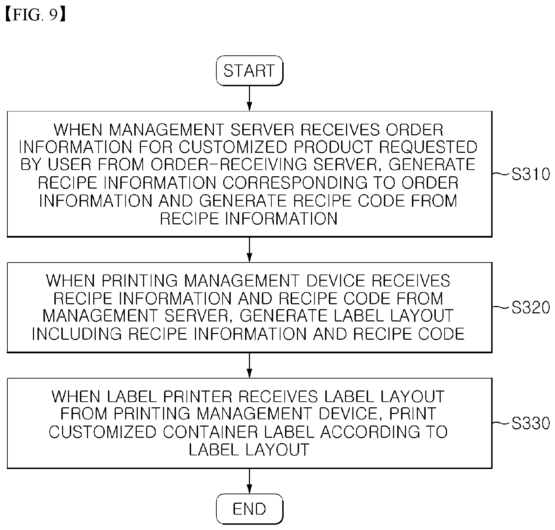

FIG. 9 is a flowchart illustrating a method for manufacturing a customized container label including a recipe code according to another embodiment of the present disclosure.

Referring to FIG. 9, the management server may receive order information for a customized product requested by a user from the order-receiving server. In this case, the management server may generate recipe information corresponding to the order information and may generate a recipe code from the recipe information (S310).

Here, the customized product may be cosmetics such as a lotion, essence, skin toner, cushion, foundation, mask, lipstick, tint, balm, and liquid lipstick or hygiene products such as shampoo, rinse, body shampoo, cleansing oil, cleansing foam, and cleansing tissue. In other words, cosmetics or sanitary products may be produced in a customized manner for each user, and recipe information for producing the customized cosmetics or customized sanitary products may be generated from the order information.

The order information may include characteristic information indicating each user's preference, health condition, or skin condition, and the management server may identify the characteristic information from the order information and then generate recipe information corresponding to the characteristic information. Here, the user's characteristic information may be obtained through an online survey or the like, and recipe information for manufacturing customized products corresponding to the characteristic information may be preconfigured.

Meanwhile, the recipe code is a visual representation of the types and amounts of ingredients included in the customized product, and may be implemented using characters, numbers, symbols, colors, and images, and in some embodiments, may also be generated by combining at least two of these. Since the conversion rule for generating a recipe code from recipe information may be preconfigured, the management server may generate a recipe code from the recipe information.

For example, the recipe information may include information about the types and amounts of base ingredients included in the customized product, the types and contents of ampoule ingredients, the types of fragrance ingredients, the intensity of the fragrance, and whether functional ingredients are included. Furthermore, a base code indicating the type and amount of each base ingredient, an ampoule code indicating the type of ampoule ingredient, a content code indicating the content of ampoule, a fragrance code indicating the type of fragrance ingredient, a fragrance level code indicating the intensity of fragrance, and a functional code indicating whether functional ingredients are included may be preconfigured. Therefore, when the types and amounts of base ingredients, the types and contents of ampoule ingredients, the types of fragrance ingredients, the intensity of fragrance, and whether functional ingredients are included are determined by the recipe information, the respective base code, ampoule code, content code, fragrance code, fragrance level code, and functional code may be determined according to the conversion rules, and these may be combined to generate a recipe code.

Subsequently, the printing management device may receive the recipe information and the recipe code from the management server, and the printing management device may generate a label layout including the recipe information and the recipe code (S320). That is, the printing management device may generate a label layout for each customized container label to print the customized container label. For example, the label layout may include a unique identification code area, a recipe code area, a full-ingredient display area, and a personal identification information area. Here, the recipe information may be displayed as a unique identification code in the unique identification code area, and the recipe code may be displayed in the recipe code area. Thereafter, when the label layout is generated, the printing management device may transmit the generated label layout to the label printer and request printing of a customized container label.

The label printer may receive the label layout from the printing management device, and may print a customized container label according to the label layout (S330). When label paper is supplied, the label printer may generate a customized container label by performing printing on the label paper according to the label layout. The label printer may perform the printing by an inkjet method or a laser jet method. The customized container label manufactured by the label printer may be attached to a container of the customized product, and the customized product may be manufactured by performing filling according to the unique identification code included in the customized container label.

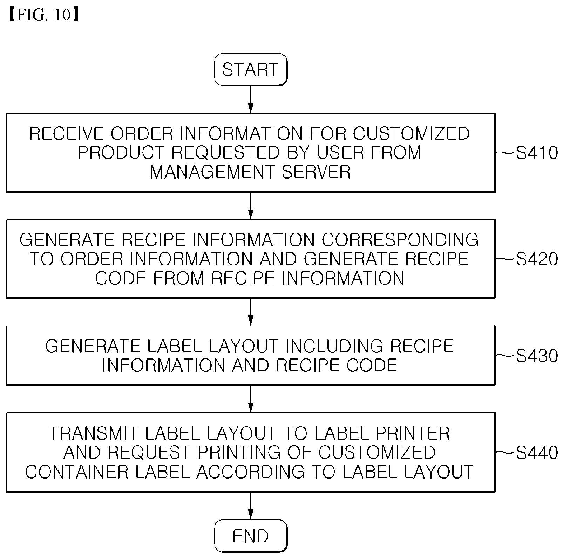

Additionally, in some embodiments, the management server may store the order information received from the order-receiving server, and may cause by the printing management device to perform the recipe information and recipe code generation from the order information. In this case, referring to FIG. 10, the printing management device may receive order information for a customized product requested by a user from the management server (S410). That is, the printing management device may receive order information stored in the management server, and in some embodiments, may receive a predetermined number of pieces of order information from the management server according to a production plan.

The printing management device may generate recipe information corresponding to the order information, and may generate a recipe code from the recipe information (S420). That is, corresponding recipe information may be generated from the user's characteristic information included in the order information, and a recipe code may be generated from the recipe information according to conversion rules. However, since the generation of the recipe information and the recipe code has been described above, a detailed description thereof will be omitted here.

The printing management device may generate a label layout including the recipe information and the recipe code (S430). Subsequently, the generated label layout may be transmitted to the label printer, thereby causing the label printer to print a customized container label.

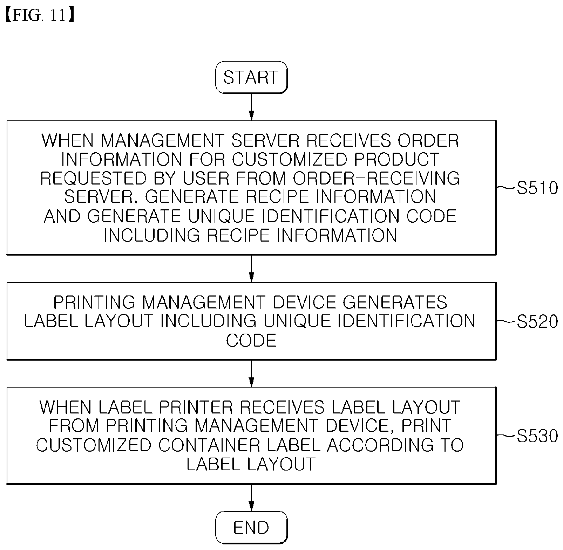

FIG. 11 is a flowchart illustrating a method for manufacturing a customized container label including a unique identification code according to another embodiment of the present disclosure.

Referring to FIG. 11, the management server may receive order information for a customized product requested by a user from the order-receiving server. In this case, the management server may generate recipe information corresponding to the order information and may generate a unique identification code from the recipe information (S510).

Here, the customized product may be a cosmetic product such as a lotion, essence, or skin toner, or a hygiene product such as shampoo, rinse, or body wash. That is, cosmetics or hygiene products may be produced in a customized manner for each user, and recipe information for producing the customized cosmetics or the customized hygiene products may be generated from the order information.

The order information may include characteristic information indicating each user's preference, health condition, or skin condition, and the management server may identify the characteristic information from the order information and then generate recipe information corresponding to the identified characteristic information. The user's characteristic information may be obtained through an online survey, or the like, and recipe information for manufacturing customized products corresponding to the characteristic information may be preconfigured.

In addition, the management server may generate a unique identification code from the recipe information. Here, the unique identification code may be implemented as a two-dimensional barcode such as a QR code, a micro QR code, or a data matrix, or as a conventional one-dimensional barcode, and includes recipe information of the corresponding customized product. The unique identification code may be printed on a customized container label and attached to each container, and the filling device may use the unique identification code to recognize the types and amounts of ingredients filled into each container.

Specifically, a customized container label on which the unique identification code has been printed may be attached to each container, and the containers may be sequentially conveyed to the filling device via a container belt or the like. In this case, a code reader may be provided in front of the filling device, and the unique identification code of each of the respective containers may be scanned using the code reader. In other words, since the unique identification code includes recipe information corresponding to each container, the code reader may scan the unique identification code to extract recipe information about the types and amounts of ingredients to be filled into each container. Subsequently, the code reader may sequentially input the extracted recipe information to the filling device, and the filling device may synchronize the order of the containers being conveyed with the order of the input recipe information, and fill the ingredients into each container.

Furthermore, in some embodiments, the unique identification code may further include customer information about the user, container information, and the like, in addition to the recipe information. Here, the customer information may be information input by the user to the order-receiving server, and may include the user's name, contact information, address, and a user ID registered by the user in the order-receiving server. In addition, the container information is configured in containers C of customized products and may be, for example, a unique code assigned to distinguish each container C individually.

That is, the management server may extract users' customer information from the received order information, and may map recipe information to customer information to generate history information of the users. In this case, each user may be specified using the customer information, and by mapping the customer information and the recipe information, it is possible to store, as history information, which customized products each user has ordered.

In some embodiments, it may also be possible to map recipe information to the container information to generate historical information for each container. In other words, a container may be specified using container information, and the container is filled according to recipe information corresponding to a specific user, thereby manufacturing a customized product, and through this, the filling device may store may store manufacturing histories of customized products as history information. Additionally, it is also possible to generate history information by mapping all of the customer information, the container information, and the recipe information.

Subsequently, the management server may receive filling information regarding the types and amounts of actual ingredients filled into each container from the filling device, and may update the history information with the filling information and store the updated history information. In this case, an administrator may identify the history information of each user by using the management server, and thus may identify and manage or discharge amount errors or missing filling of some ingredients in each container.

The printing management device may receive the unique identification code from the management server and may generate a label layout including the unique identification code (S520). That is, the printing management device may generate a label layout for each customized container label to print the customized container label. For example, the label layout may include a unique identification code area, a recipe code area, a full-ingredient display area, and a personal identification information area. Thereafter, when the label layout is generated, the printing management device may transmit the generated label layout to the label printer to request printing of a customized container label.

The label printer may receive the label layout from the printing management device and may print a customized container label according to the label layout (S530). When label paper is supplied, the label printer may perform printing on the label paper according to the label layout to generate a customized container label, and the label printer may perform printing by an inkjet method or a laser jet method. Subsequently, the customized container label produced by the label printer may be attached to a container of the customized product, and customized products may be manufactured by performing filling according to the unique identification code included in the customized container label.

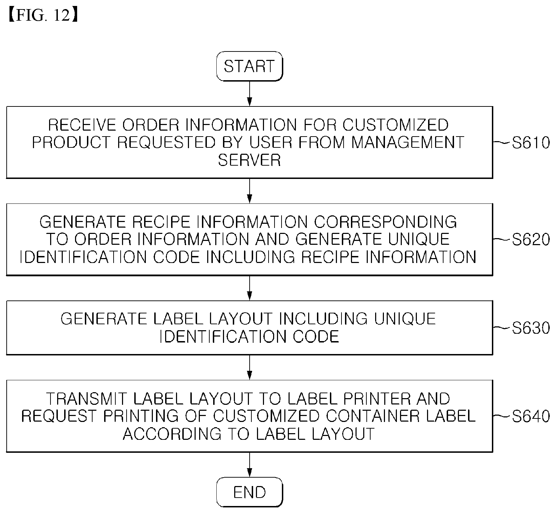

Additionally, in some embodiments, the management server may store the order information received from the order-receiving server and may also cause the printing management device to generate a unique identification code from the order information. In this case, referring to FIG. 12, the printing management device may receive order information for a customized product requested by a user from the management server (S610). That is, the printing management device may receive the order information stored in the management server, and in some embodiments, may receive a predetermined number of pieces of order information from the management server according to a production plan.

The printing management device may generate recipe information corresponding to the order information and may generate a unique identification code from the recipe information (S620). That is, corresponding recipe information may be generated from the user's characteristic information included in the order information, and a unique identification code may be generated in the form of a two-dimensional barcode such as a QR code, a micro QR code, or a data matrix, or in the form of a conventional one-dimensional barcode. However, since the generation of the unique identification code has been described above, a detailed description thereof will be omitted herein.

The printing management device may generate a label layout including the unique identification code (S630), and transmit the generated label layout to the label printer, thereby causing the label printer to print a customized container label.

### <Customized Cosmetic Manufacturing System>

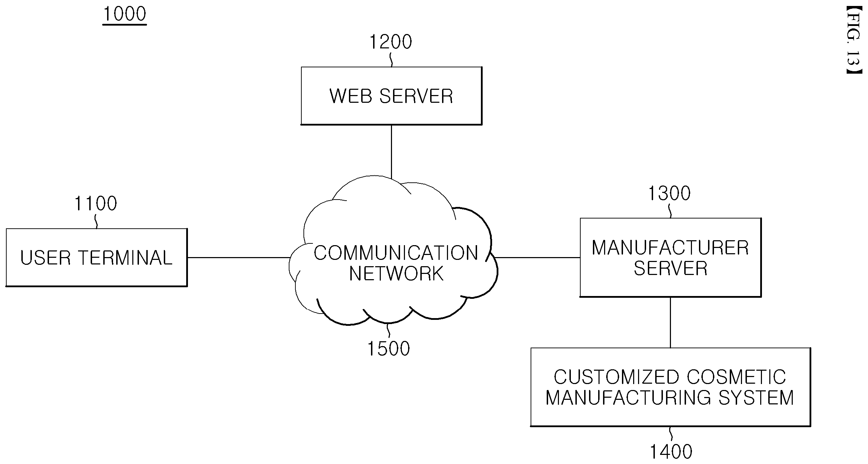

FIG. 13 is a diagram illustrating the configuration of a customized cosmetic sales system according to an embodiment of the present disclosure.

Referring to FIG. 13, a customized cosmetic sales system 1000 according to an embodiment of the present disclosure may include a user terminal 1100, a web server 1200, a manufacturer server 1300, a customized cosmetic manufacturing system 1400, and a communication network 1500.

The user terminal 1100, the web server 1200, and the manufacturer server 1300 may be connected to each other via the communication network 1500. The communication network 1500 may include a wired network and a wireless network, and specifically may include various networks such as a local area network (LAN), a metropolitan area network (MAN), and a wide area network (WAN). In addition, the communication network 1500 may also include a well-known World Wide Web (WWW). However, the communication network 1500 according to the present disclosure is not limited to the above-listed networks, and may include at least one of a well-known wireless data network, a well-known telephone network, and a well-known wired/wireless television network.

The user terminal 1100 may access the web server 1200 to receive a web service. That is, the user terminal 1100 may receive a web page from the web server 1200 and display the web page on a display unit. In this case, the web page may include a user interface for selling general cosmetics and/or customized cosmetics. Additionally, the web page may include a user interface for acquiring consumer's questionnaire information through survey responses.

A terminal user (i.e., the consumer) may purchase general cosmetics and/or customized cosmetics through the web page. In this case, the terminal user may input personal information, survey response information, and product purchase information through the web page.

The user terminal 1100 may provide the web server 1200 with user information input through the web page, such as the terminal user's personal information, survey response information, and product purchase information.

The user terminal described in the present specification may include a mobile phone, a smartphone, a laptop computer, a desktop computer, a digital broadcast terminal, a personal digital assistant (PDA), a portable multimedia player (PMP), a navigation device, a slate PC, a tablet PC, an ultrabook, a wearable device, or the like.

The web server 1200 may provide a web service related to cosmetic sales to the user terminal 1100. That is, the web server 1200 may generate a web page for selling general cosmetics and/or customized cosmetics, and may provide the generated web page to the user terminal 1100.

The web server 1200 may acquire the terminal user's personal information, survey response information, product purchase information, payment information, etc., from the user terminal 1100. In addition, the web server 1200 may store and manage the information acquired from the user terminal 1100 in a database (DB).

The web server 1200 may generate the terminal user's order information and invoice information, based on the product purchase information and the payment information acquired from the user terminal 1100.

The web server 1200 may generate the terminal user's questionnaire information, based on the terminal user's survey response information. Here, the questionnaire information may include information about the terminal user's preference, health condition, and skin condition.

The web server 1200 may provide the terminal user's questionnaire information, order information, and invoice information to the manufacturer server 1300.

The manufacturer server 1300 may acquire the terminal user's questionnaire information, order information, and invoice information from the web server 1200 and store and manage the acquired information in a database (DB). Meanwhile, the present embodiment exemplifies the generation of the terminal user's questionnaire information, order information, and invoice information by the web server 1200, but the present disclosure is not necessarily limited thereto. The terminal user's questionnaire information, order information, and invoice information may also be generated by the manufacturer server 1300.

The manufacturer server 1300 may provide the customized cosmetic manufacturing system 1400 with customer information including at least one of the terminal user's questionnaire information, order information, and invoice information.

Meanwhile, the present embodiment exemplifies that a server (i.e., the web server) operated by a cosmetics seller and a server (i.e., a manufacturer server) operated by a cosmetics manufacturer are independently configured, but the present disclosure is not necessarily limited thereto. Therefore, when the cosmetics manufacturer and the cosmetics seller are the same, it will be obvious to those skilled in the art that the web server and the manufacturer server may be configured as a single server.

The customized cosmetic manufacturing system 1400 may automatically produce cosmetics suitable for the terminal user's preference and/or skin condition, i.e., customized cosmetics, based on the customer information acquired from the manufacturer server 1300.

The customized cosmetic manufacturing system 1400 may generate filling information (i.e., recipe information) for manufacturing a customized cosmetic, based on the terminal user's questionnaire information and order information acquired from the manufacturer server 1300, and may generate an identification code (e.g., a 2D barcode such as a QR code, a micro QR code, or a data matrix, or a conventional 1D barcode) including the generated filling information. Here, the filling information may include the mixing ratio and the discharge amount of ingredients that constitute the customized cosmetic.

The customized cosmetic manufacturing system 1400 may attach the terminal user's identification code or a label including the identification code to the cosmetic container, and may automatically manufacture the customized cosmetic by using the filling information included in the identification code. A more detailed description regarding the customized cosmetic manufacturing system 1400 will be provided later.

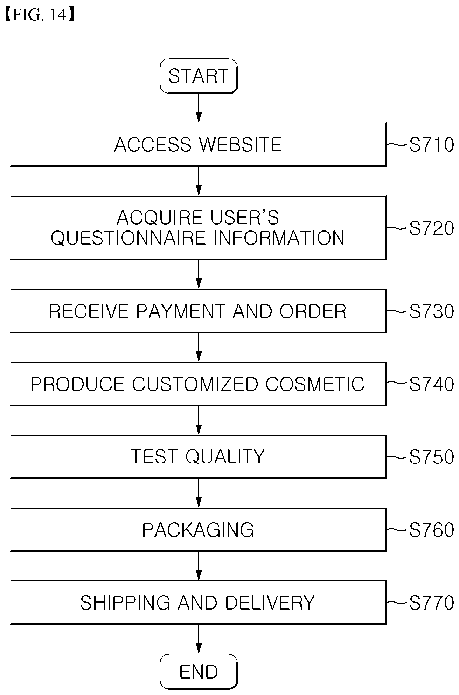

FIG. 14 is a flowchart illustrating a customized cosmetic sales process according to an embodiment of the present disclosure.

Referring to FIG. 14, the user terminal 1100 may access a website provided by the web server 1200 (S710). Here, the web site may include a cosmetic sales site operated by a cosmetic manufacturer or a cosmetic seller.

The user terminal 1100 may receive a web page from the website and may display the received web page on a display unit. The terminal user may purchase general cosmetics and/or customized cosmetics through the web page displayed on the user terminal 1100.

When the terminal user wants to purchase a customized cosmetic, the web server 1200 may provide the user terminal 1100 with a web page including survey information for surveying the user. In this case, the survey information may include multiple survey questions related to the terminal user's preference, health condition, and skin condition.

The user terminal 1100 may provide survey response information input through the web page to the web server 1200. The web server 1200 may acquire questionnaire information including the terminal user's preference, health condition, and skin condition, based on the survey response information received from the user terminal 1100 (S720).

Subsequently, when the cost for the customized cosmetic is paid, the web server 1200 may receive order information for the customized cosmetic from the user terminal 1100 (S730). That is, the web server 1200 may acquire the terminal user's product purchase information and payment information from the user terminal 1100. The web server 1200 may generate the terminal user's order information and invoice information, based on the information acquired from the user terminal 1100.

The web server 1200 may provide customer information including at least one of the terminal user's questionnaire information, order information, and invoice information to the manufacturer server 1300. The manufacturer server 1300 may store the information acquired from the web server 1200 in a database and may provide the information to the customized cosmetic manufacturing system 1400.

The customized cosmetic manufacturing system 1400 may generate filling information for manufacturing a customized cosmetic, based on the information acquired from the manufacturer server 1300, i.e., the terminal user's questionnaire information and order information, and may generate an identification code (e.g., a 2D barcode such as a QR code, a micro QR code, or a data matrix, or a conventional 1D barcode) including the filling information.

The customized cosmetic manufacturing system 1400 may attach the terminal user's identification code or a label including the identification code to a cosmetic container, and automatically produce the customized cosmetic using the filling information included in the identification code (S740).

When the manufacturing of the customized cosmetics is completed, a quality test of the customized cosmetic may be performed using quality testing equipment provided in the system 1400 or separate quality testing equipment (S750).

When the customized cosmetic passes the quality test, the customized cosmetic may be packaged in a cosmetics box (S760). Subsequently, after an invoice number allocated to the terminal user is attached to the cosmetic box, the customized cosmetic may be delivered to a delivery company (S770). The delivery company will deliver the customized cosmetic to the terminal user's address.

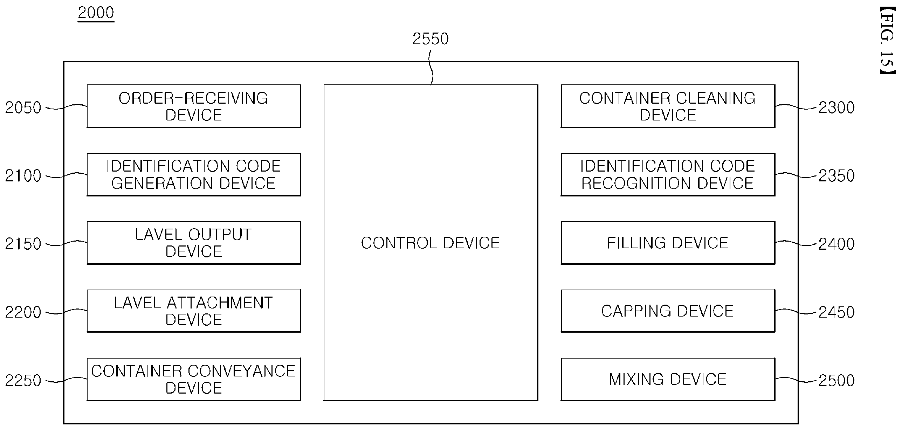

FIG. 15 is a diagram illustrating a configuration of a customized cosmetic manufacturing system according to an embodiment of the present disclosure.

Referring to FIG. 15, a customized cosmetic manufacturing system 2000 according to an embodiment of the present disclosure may include an order-receiving device 2050, an identification code generation device 2100, a label output device 2150, a label attachment device 2200, a container conveyance device 2250, a container cleaning device 2300, an identification code recognition device (or code reader) 2350, a filling device 2400, a capping device 2450, a mixing device 2500, and a control device 2550. The components shown in FIG. 15 are not essential for implementing the customized cosmetic manufacturing system. Therefore, the customized cosmetic manufacturing system described in the present specification may have more or fewer components than those listed above.

The order-receiving device 2050 may receive, from the manufacturer server 1300, cosmetic order requests from consumers. In this case, the order-receiving device 2050 may receive customer information including at least one of the consumers' questionnaire information, order information, and invoice information from the manufacturer server 1300.

The identification code generation device 2100 may generate filling information for manufacturing customized cosmetics suitable for consumers, based on the consumers' customer information received from the order-receiving device 2050. Here, the filling information may include information on the mixing ratios and discharge amounts of ingredients that constitute the customized cosmetics.

The identification code generation device 2100 may generate identification codes including the consumers' filling information, and may provide the identification codes to the label output device 2150. Here, each identification code may include invoice information and other information, together with the filling information. In addition, a bar code or a QR code may be used as the identification code, and more preferably, a QR code may be used. In addition, the identification code may be referred to as a unique identification code.

Meanwhile, in the present embodiment, the order-receiving device 2050 and the identification code generation device 2100 are exemplarily configured as separate devices. However, the present disclosure is not necessarily limited thereto, and it will be apparent to those skilled in the art that the order-receiving device 2050 and the identification code generation device 2100 may be configured as a single device.

The label output device 2150 may output labels including the identification code information acquired from the identification code generation device 2100. Each label may further include customer identification (ID) information (i.e., personal identification information), a recipe code, and product information (i.e., full-ingredient information) together with a corresponding consumer's identification code information. The recipe code may include filling information.

The label attachment device 2200 may perform a function of sequentially attaching the labels acquired from the label output device 2150 to cosmetic containers.

The container conveyance device 2250 may include multiple conveyance holders for holding cosmetic containers to which consumers' unique labels have been attached. The container conveyance device 2250 may sequentially convey cosmetic containers mounted to the conveyance holders. A conveyor belt may be representatively used as the container conveyance device 2250, but the present disclosure is not necessarily limited thereto.

The container cleaning device 2300 may perform the function of removing foreign substances present inside a cosmetic container. For example, the container cleaning device 2300 may clean the inside of a cosmetic container mounted on a conveyance holder while the container is rotated by 180 degrees, using water, air, or other substances.

The identification code recognition device 2350 may recognize identification codes on labels attached to cosmetic containers. The identification code recognition device 2350 may recognize the identification code for each cosmetic container and acquire filling information regarding ingredients to be injected into the corresponding cosmetic container. The identification code recognition device 2350 may provide the acquired filling information to the controller 2550.

Meanwhile, although not illustrated in the drawings, the customized cosmetic manufacturing system 2000 may further include one or more recognition devices for identifying at least one of customer identification information, recipe codes, and product information included in a label, in addition to the identification code recognition device 2350.

The filling device 2400 may include multiple filling units for injecting multiple ingredients necessary for the manufacturing of customized cosmetics. The multiple filling units may include one or more filling units for providing a sensory base, one or more filling units for providing a functional-effect base, one or more filling units for providing a fragrance base, one or more filling units for providing a thickening base, and one or more filling units for providing a buffer base.

Each filling unit may include a hopper for storing a cosmetic ingredient, a nozzle for injecting the cosmetic ingredient into a cosmetic container, and a connection member connecting the hopper to the nozzle. Meanwhile, in another embodiment, each filling unit may further include a sensor for measuring the amount of ingredient discharged from the nozzle and a sensor for measuring the amount of ingredient present in the hopper.

The filling device 2400 may, based on control commands of the control device 2550, select ingredients to be injected into a cosmetic container and adjust the injection amount of the selected ingredients. That is, the filling device 2400 may adjust the amount of ingredient discharged from each nozzle, based on a control command from the controller 2550.

The filling device 2400 may perform a function of sequentially injecting multiple ingredients suitable for the terminal user's preference and/or skin condition into the cosmetic container, based on the filling information included in the identification code.

In the meantime, in another embodiment, the filling device 2400 may perform a function of sequentially injecting at least one ingredient suitable for the terminal user's preference and/or skin condition into the cosmetic container, based on the filling information included in the recipe code.

The capping device 2450 may perform a function of placing a cosmetic cap on the upper portion of a cosmetic container having passed through the filling device 2400 and then rotating the cap in a clockwise direction, thereby performing capping.

The mixing device 2500 may perform a function of rotating the customized cosmetics, which have passed through the capping device 2450, at a predetermined speed to mix the contents present inside the cosmetic container.

The controller 2550 may control the overall operation of the customized cosmetic manufacturing system 2000 by executing an application program stored in a memory (not shown). To execute the application program stored in the memory, the controller 2550 may control at least some of the components 2050 to 2500 constituting the system 2000. Furthermore, to execute the application program, the controller 2550 may operate at least two of the components included in the system 2000 in combination with each other.

The controller 2550 may acquire the filling information included in the identification code attached to the cosmetic container from the identification code recognition device 2350. The controller 2550 may control the discharge amount per nozzle of the filling device 2400, based on the filling information acquired from the identification code recognition device 2350. Accordingly, the filling device 2400 may sequentially inject ingredients having a mixing ratio corresponding to filling information of a specific consumer into a cosmetic container by using the multiple nozzles.

Meanwhile, although not illustrated in the drawings, the customized cosmetic manufacturing system 2000 may include a manipulation panel for displaying the current operating state of the system 2000 and controlling the operation of the system 2000. The manipulation panel may include a display panel for displaying information and a touch panel for receiving a user's touch input. As described above, the customized cosmetic manufacturing system according to an embodiment of the present disclosure may attach a specific consumer's unique identification code to a cosmetic container and automatically manufacture a customized cosmetic suitable for the consumer's preference and/or skin condition by using filling information included in the attached unique identification code.

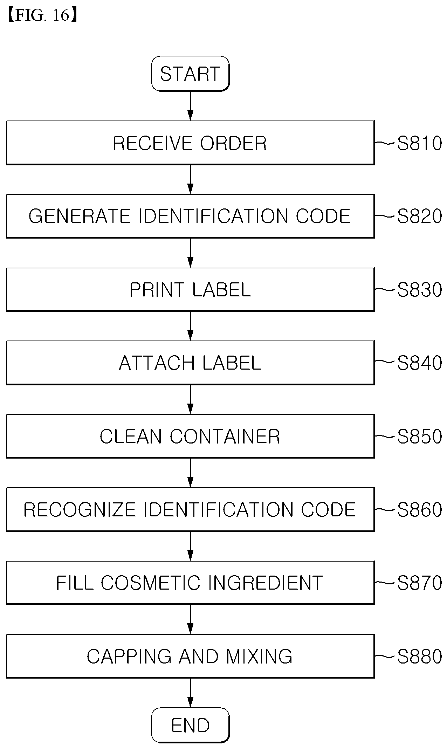

FIG. 16 is a flowchart illustrating a customized cosmetic manufacturing process according to an embodiment of the present disclosure.

Referring to FIG. 16, the customized cosmetic manufacturing system 2000 according to an embodiment of the present disclosure may receive a consumer's order request from the manufacturer server 1300 (S810). In this case, the customized cosmetic manufacturing system 2000 may receive customer information including at least one of the consumer's questionnaire information, order information, and invoice information from the manufacturer server 1300.

The customized cosmetic manufacturing system 2000 may generate, based on the consumer's customer information, filling information for manufacturing a cosmetic suitable for the consumer's preference and/or skin condition, and may generate an identification code including the generated filling information (S820). Here, as the identification code, a 2D barcode such as a QR code, a micro QR code, or a data matrix, or a conventional 1D barcode, may be used, and, more preferably, a QR code may be used.

The customized cosmetic manufacturing system 2000 may output labels including at least one of the consumer's identification code information, customer identification information, recipe information, and product information (S830).

The customized cosmetic manufacturing system 2000 may attach the output labels to cosmetic containers (S840).

The customized cosmetic manufacturing system 2000 may mount the cosmetic container having the labels attached thereto on the container conveyance device. In addition, the customized cosmetic manufacturing system 2000 may sequentially clean the multiple cosmetic containers mounted on the container conveying device (S850).

The customized cosmetic manufacturing system 2000 may sequentially recognize identification codes included in the labels attached to the cosmetic containers by using the identification code recognition device (S860). The customized cosmetic manufacturing system 2000 may acquire filling information regarding ingredients to be injected into each cosmetic container by recognizing the identification code for each cosmetic container.

The customized cosmetic manufacturing system 2000 may sequentially inject multiple ingredients suitable for a specific consumer's preference and/or skin condition into the cosmetic container by using multiple dispensers (S870). In this case, the customized cosmetic manufacturing system 2000 may adjust the discharge amount per nozzle, based on the acquired filling information.

When filling is completed, the customized cosmetic manufacturing system 2000 may cap the cosmetic container with a cosmetic cap (S880). In addition, the customized cosmetic manufacturing system 2000 may rotate the capped cosmetic at a predetermined speed to mix the contents inside the cosmetic container.

As described above, the customized cosmetic manufacturing method according to an embodiment of the present disclosure may attach a specific consumer's unique identification code to a cosmetic container and automatically manufacture a customized cosmetic suitable for the consumer's preference and/or skin condition by using filling information included in the attached unique identification code.

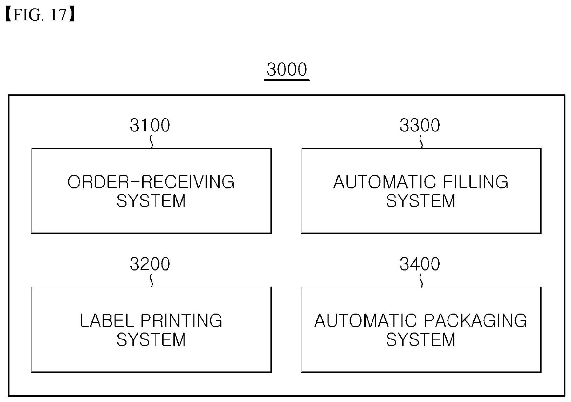

FIG. 17 is a diagram illustrating a configuration of a customized cosmetic manufacturing system according to another embodiment of the present disclosure.

Referring to FIG. 17, a customized cosmetic manufacturing system 3000 according to another embodiment of the present disclosure may include an order-receiving system 3100, a label printing system 3200, an automatic filling system 3300, and an automatic packaging system 3400.

The order-receiving system 3100 may receive, from the manufacturer server 1300, cosmetic order requests from consumers. In this case, the order-receiving system 3100 may receive customer information, which includes at least one of the consumers' questionnaire information, order information, and invoice information, from the manufacturer server 1300.

The label printing system 3200 may generate filling information (i.e., recipe information) for manufacturing customized cosmetics, based on information acquired through the order-receiving system 3100, i.e., a terminal user's questionnaire information and order information.

The label printing system 3200 may generate an identification code including the consumer's filling information. Here, the identification code may include invoice information and other information, in addition to the filling information. In addition, as the identification code, a 2D barcode such as a QR code, a micro QR code, or a data matrix, or a conventional 1D barcode, may be used, and, more preferably, a QR code may be used.

The label printing system 3200 may print a label including the consumer's identification code information and attach the printed label to a cosmetic container. The label may include customer identification (ID) information, recipe information, and product information, together with the consumer's identification code information.

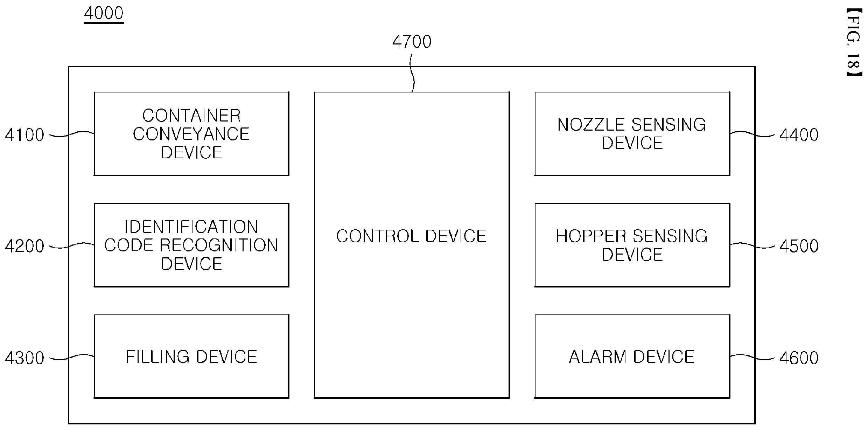

The automatic filling system 3300 may recognize the identification code on the label attached to the cosmetic container by using the identification code recognition device. The automatic filling system 3300 may automatically fill the cosmetic container with ingredients suitable for the consumer's preference and/or skin condition, based on the fill information included in the identification code. A more detailed description of the automatic filling system 3300 will be given below with reference to FIG. 18.

The automated packaging system 3400 may cap the cosmetic container filled with the consumer's customized ingredients and then rotate the capped cosmetic container at a predetermined speed to mix the contents inside the cosmetic container. The automatic packaging system 3400 may automatically package the cosmetic container into a cosmetic box.

FIG. 18 is a diagram illustrating a configuration of an automatic customized cosmetics filling system according to an embodiment of the present disclosure.

Referring to FIG. 18, an automatic customized cosmetic filling system 4000 according to an embodiment of the present disclosure may include a container conveyance device 4100, an identification code recognition device 4200, a filling device 4300, a nozzle sensing device 4400, a hopper sensing device 4500, an alarm device 4600, and a control device 4700. The components illustrated in FIG. 18 are not necessarily essential to implement the automatic customized cosmetic filling system, and therefore, the automatic customized cosmetic filling system described in the present specification may include more or fewer components than those listed above.

The container conveying device 4100 may include multiple conveyance holders for mounting cosmetic containers with labels unique to consumers. The container conveyance device 4100 may perform the function of sequentially moving cosmetic containers mounted on the respective conveyance holders. A conveyor belt may representatively be used as the container conveyance device 4100, but the present disclosure is not necessarily limited thereto.

The identification code recognition device 4200 may recognize identification codes of labels attached to cosmetic containers. The identification code recognition device 4200 may recognize the identification code for each cosmetic container to acquire filling information regarding ingredients to be injected into the corresponding cosmetic container. The identification code recognition device 4200 may provide the acquired filling information to the control device 4700.

The filling device 4300 may include multiple filling units for injecting multiple ingredients necessary for the manufacturing of a customized cosmetic. The multiple filling units may include one or more filling units for providing a sensory base, one or more filling units for providing a functional-effect base, one or more filling units for providing a fragrance base, one or more filling units for providing a thickening base, and one or more filling units for providing a buffer base.

Each filling unit may include a hopper for storing a cosmetic ingredient, a nozzle for injecting the cosmetic ingredient into a cosmetic container, and a connection member connecting the hopper to the nozzle.

The filling device 4300 may, based on control commands of the control device 4700, select ingredients to be injected into the cosmetic container and adjust the injection amount of the selected ingredients. That is, the filling device 4300 may adjust the discharge amount of the ingredient discharged from each nozzle, based on a control command of the control device 4700.

The filling device 4300 may perform a function of sequentially injecting multiple ingredients suitable for the terminal user's preference and/or skin condition into the cosmetic container, based on the filling information included in the identification code.

The nozzle sensing device 4400 may be disposed in each filling unit to perform a function of measuring the discharge amount of an ingredient discharged from the nozzle of each filling unit. In this case, the nozzle sensing device 4400 may measure the discharge amount of each nozzle by using a predetermined frequency.

The nozzle sensing device 4400 may provide information about the measured discharge amount of each nozzle to the control device 4700. Meanwhile, according to an embodiment of the present disclosure, the nozzle sensing device 4400 may be configured to be omitted.

The hopper sensing device 4500 may be disposed on each filling unit to perform the function of measuring the amount of ingredient present in the hopper of each filling unit. The hopper sensing device 4500 may provide information about the measured amount of remaining ingredient per hopper to the control unit 4700. Similarly, according to an embodiment of the present disclosure, the hopper sensing device 4500 may be omitted.

The alarm device 4600 may output alarm information indicating the occurrence of a specific event when the specific event occurs. The specific event, which is an event related to filling of a customized cosmetic, may include an event in which the reference discharge amount and the actual discharge amount per nozzle do not match, an event in which the remaining ingredient amount per hopper drops to or below a threshold value, and the like, but is not necessarily limited thereto.

The alarm device 4600 may output the alarm information by using a visual signal and/or an auditory signal according to a control command from the control device 4700. Similarly, according to an embodiment of the present disclosure, the alarm device 4600 may be omitted.

The control device 4700 may control the overall operation of the automatic customized cosmetic filling system 4000 by executing an application program stored in a memory (not shown). To execute an application program stored in the memory, the control device 4700 may control at least some of the components 4100 to 4600 constituting the system 400. Furthermore, to execute the application program, the control unit 4700 may operate at least two of the components included in the system 4000 in combination with each other.

The control device 4700 may acquire the filling information included in the identification code attached to the cosmetic container from the identification code recognition device 4200. The control device 4700 may control the discharge amount per nozzle of the filling device 4300, based on the filling information acquired from the identification code recognition device 4200. Accordingly, the filling device 4300 may sequentially inject ingredients having a mixing ratio corresponding to filling information of a specific consumer into the cosmetic container by using multiple nozzles.

The control device 4700 may provide first alarm information, based on the first sensing data received from the nozzle sensing device 4400. In addition, the control device 4700 may provide second alarm information, based on second sensing data received from the hopper sensing device 4500. The first and second alarm information may be output through the alarm device 4600 or a manipulation panel (not shown).

Meanwhile, although not illustrated in the drawings, the automatic customized cosmetic filling system 4000 may further include an ingredient injection device for automatically injecting cosmetic ingredients into the hopper of each filling unit. When the remaining amount of ingredient in each hopper drops to or below the threshold value, the ingredient injection device may automatically inject the corresponding cosmetic ingredient into the hopper of each filling unit, based on a control command from the control device 4700.

As described above, the automatic customized cosmetic filling system according to an embodiment of the present disclosure may recognize a specific consumer's unique identification code attached to a cosmetic container and automatically fill a cosmetic container with ingredients suitable for the consumer's preference and/or skin condition by using filling information included in the unique identification code.

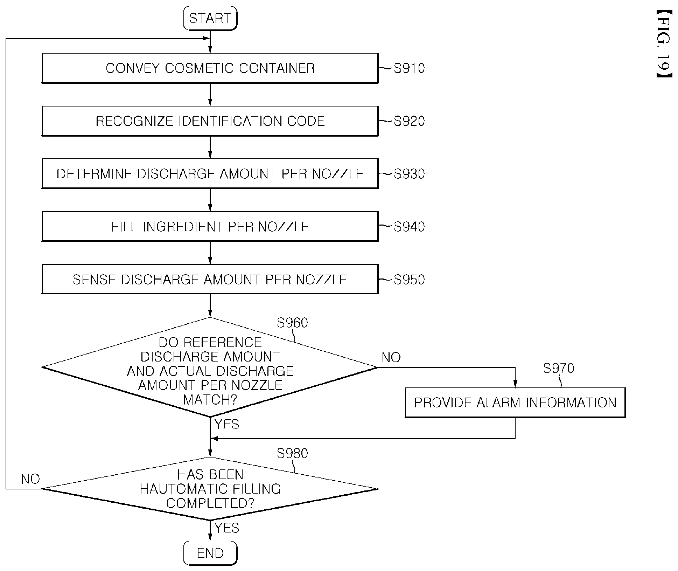

FIG. 19 is a flowchart illustrating an automatic customized cosmetic filling process according to an embodiment of the present disclosure.

Referring to FIG. 19, the automatic customized cosmetic filling system 4000 according to an embodiment of the present disclosure may sequentially convey cosmetic containers, to which consumers' unique identification codes are attached, by using a container conveyance device having multiple conveyance holders (S910).

The automatic customized cosmetic filling system 4000 may sequentially recognize identification codes attached to the cosmetic containers by using an identification code recognition device (S920).

The automatic customized cosmetic filling system 4000 may recognize the identification code of each cosmetic container and acquire filling information about ingredients to be injected into each cosmetic container. The automatic customized cosmetic filling system 4000 may determine the discharge amount per nozzle of the filling device, based on the acquired filling information (S930).

The automatic customized cosmetic filling system 4000 may sequentially inject the ingredients corresponding to the determined nozzle discharge amount into the cosmetic container by using multiple filling units (S940).

The automatic customized cosmetic filling system 4000 may measure the discharge amount of ingredient discharged from the nozzle of each filling unit by using a nozzle sensing device (S950).

The customized cosmetics automatic filling system 4000 may identify whether a reference discharge amount (i.e., the discharge amount of the identification code) and an actual discharge amount per nozzle match each other (S960).

When, as a result of the identification in operation 960, the reference discharge amount and the actual discharge amount per nozzle do not match, the automatic customized cosmetic filling system 4000 may provide a system administrator with alarm information indicating that a problem has occurred in the filling device (S970).

Meanwhile, when, as a result of the identification in operation 960, the reference discharge amount and the actual discharge amount per nozzle match, the automatic customized cosmetic filling system 4000 may identify whether the automatic filling process of the customized cosmetic is ended (S980).

When, as a result of the identification in operation 980, the automatic filling process is not ended, the automatic customized cosmetic filling system 4000 may repeatedly perform operations 910 to 970 described above.

Meanwhile, although not illustrated in the drawings, the automatic customized cosmetic filling system 4000 may also measure the amount of ingredient present in the hopper of each filling unit by using a hopper sensing device. When, as a result of the measurement, the amount of ingredient in a specific hopper is equal to or less than a threshold value, the automatic customized cosmetic filling system 4000 may provide a system administrator with alarm information instructing the replenishment of ingredient for the corresponding hopper.

As described above, the automatic customized cosmetic filling method according to an embodiment of the present disclosure may recognize a specific consumer's unique identification code attached to a cosmetic container and automatically fill ingredients suitable for the consumer's preference and/or skin condition into a cosmetic container by using filling information included in the unique identification code.

The present disclosure described above may be implemented as a computer-readable code on a medium in which a program is recorded. The computer-readable medium may be a medium for continuously storing a computer-executable program or temporarily storing the program for execution or download. In addition, the medium may be various recording or storage means in the form of a single hardware device or a combination of multiple hardware devices. The medium is not limited to a medium directly connected to a computer system, and may also be distributed over a network. Examples of media may include: magnetic media such as a hard disk, a floppy disk, and a magnetic tape; optical recording media such as a CD-ROM and a DVD; a magneto-optical medium such as a floptical disk; and a ROM, a RAM, a flash memory, etc., which are configured to store program instructions. In addition, other examples of media may include a recording medium or a storage medium managed by an application store that distributes applications, or various other sites or servers that supply or distribute software. Therefore, the above detailed description should not be interpreted as limiting in any respect, but rather as exemplary. The scope of the present disclosure should be determined by a reasonable interpretation of the appended claims, and all changes within the equivalent scope of the present disclosure are included in the scope of the present disclosure.

The present disclosure is not limited by the embodiments and drawings described above. It will be apparent to those skilled in the art to which the present disclosure pertains that the components according to the present disclosure may be substituted, modified, or changed without departing from the technical idea of the present disclosure.

## Claims

1. A method for manufacturing a customized container label, the method comprising:
upon receiving order information for a customized product requested by a user from an order-receiving server, generating recipe information corresponding to the order information by a management server; and
upon receiving the recipe information from the management server, generating a label layout comprising the recipe information by a printing management device.

2. The method of claim 1, further comprising extracting personal identification information included in the order information.

3. The method of claim 2, wherein the label layout further comprises the personal identification information.

4. The method of claim 2, wherein the personal identification information is one of a character, a number, a symbol, an emoticon, an image, and a color input by a user by using a user terminal to the order-receiving server, or a combination thereof.

5. The method of claim 2, wherein the personal identification information is a signature image input by the user into the user terminal by using a touch input.

6. The method of claim 1, further comprising, upon receiving the label layout from the printing management device, printing a customized container label according to the label layout by a label printer.

7. The method of claim 1, wherein the customized product is a cosmetic or a hygienic product, and
the recipe information comprises information about types and amounts of ingredients filled into a container of the customized product according to the order information.

8. The method of claim 1, further comprising generating a recipe code from the recipe information.

9. The method of claim 8, wherein the label layout further comprises the recipe code.

10. The method of claim 8, wherein the recipe code visually indicating types and amounts of ingredients included in the customized product according to the recipe information.

11. The method of claim 8, wherein the recipe code is generated using one of a character, a number, a symbol, a color, and an image, or a combination thereof.

12. The method of claim 8, wherein the recipe code comprises at least one of a base code indicating a type and an amount of base ingredient included in the customized product, an ampoule code indicating a type of ampoule ingredient, a content code indicating a content of the ampoule, a fragrance code indicating a type of fragrance ingredient, a fragrance level code indicating an intensity of fragrance, and a functional code indicating whether a functional ingredients is included.

13. The method of claim 1, further comprising generating a unique identification code comprising the recipe information.

14. The method of claim 13, wherein the label layout has the unique identification code comprising the recipe information.

15. The method of claim 13, wherein the unique identification code is a one-dimensional barcode or a two-dimensional barcode comprising one of a QR code, a micro QR code, and a data matrix.

16. The method of claim 13, wherein the unique identification code further comprises customer information of the user, and
the customer information comprises at least one of the user's name, contact information, address, and a user identifier (ID) registered by the user in the order-receiving server.

17. The method of claim 13, further comprising extracting the customer information of the user from the order information and storing the customer information having the recipe information matched thereto as history information by the management server.

18. The method of claim 17, wherein the history information is updated to further comprise filling information regarding types and amounts of ingredients filled by a filling device into a container to which a customized container label having the label layout printed thereon is attached.

19. The method of claim 13, wherein the unique identification code further comprises container information assigned to individually distinguish between containers of the customized product.

20. A method for manufacturing a customized container label by a printing management device, the method comprising:
receiving order information for a customized product requested by a user from a management server;
generating recipe information corresponding to the order information; and
generating a label layout comprising the recipe information.

21. A customized cosmetic manufacturing system comprising:
a management server configured to, upon receiving order information for a customized product requested by a user from an order-receiving server, generate recipe information corresponding to the order information;
a printing management device configured to, upon receiving the recipe information from the management server, generate a label layout comprising the recipe information; and
a label printer configured to output a customized container label according to the label layout.

22. The customized cosmetic manufacturing system of claim 21, wherein the printing management device comprises:
a reception unit configured to receive order information for a customized product requested by a user from the management server;
a preprocessing unit configured to generate recipe information corresponding to the order information; and
a layout generation unit configured to generate a label layout comprising the recipe information.

23. The customized cosmetic manufacturing system of claim 21, further comprising:
a label attachment device configured to attach the customized container label to a cosmetic container;
an identification code recognition device configured to recognize an identification code included in the customized container label; and
a filling device configured to, based on filling information included in the identification code, inject ingredients for manufacturing the user's customized cosmetic into the cosmetic container.

24. The customized cosmetic manufacturing system of claim 23, further comprising:
a container conveyance device configured to move the cosmetic container having the customized container label attached thereto; and
a container cleaning device configured to cleaning the inside of the cosmetic container.

25. The customized cosmetic manufacturing system of claim 24, further comprising:
a capping device configured to cap the cosmetic container with a cosmetic cap; and
a mixing device configured to rotate the capped cosmetic container to mix contents therein.

26. The customized cosmetic manufacturing system of claim 23, wherein the filling information comprises information about mixing ratios and discharge amounts of ingredients constituting a customized cosmetic suitable for the user.

27. The customized cosmetic manufacturing system of claim 23, further comprising a control device configured to control a discharge amount per nozzle of the filling device, based on the filling information included in the identification code.

28. The customized cosmetic manufacturing system of claim 23, wherein the filling device comprises multiple filling units configured to inject multiple ingredients necessary for cosmetic manufacturing, and
each of the filling units comprises a hopper configured to store an ingredient, a nozzle configured to inject the ingredient into a cosmetic container, and a connection member configured to connect the hopper and the nozzle to each other.

29. The customized cosmetic manufacturing system of claim 28, further comprising a nozzle sensing device configured to measure a discharge amount of ingredient discharged from the nozzle of each of the filling units.

30. The customized cosmetic manufacturing system of claim 28, further comprising a hopper sensing device configured to measure an amount of ingredient present in the hopper of each of the filling units.

31. The customized cosmetic manufacturing system of claim 23, further comprising an alarm device configured to output alarm information indicating occurrence of an event related to the filling of the customized cosmetic.
